# EUROPEAN PATENT SPECIFICATION

(11) **EP 1 477 452 B1**
(45) Date of publication and mention of the grant of the patent: **28.02.2007**
(21) Application number: 03425300.5
(22) Date of filing: 12.05.2003
(51) Int. Cl.: B66C 23/90, B66C 23/68, B66C 23/687, G01G 19/16

(54) **Process and device for detecting weight applied on a crane arm**
Verfahren und Vorrichtung zum Ermitteln der Last eines Kranauslegers
Procédé et dispositif pour détecter la charge appliquée à un bras de grue

(43) Date of publication of application: 17.11.2004
(73) Proprietor: FASSI GRU S.p.A., 24021 Albino, BG (IT)
(72) Inventor: Fassi, Giovanni, 24100 Bergamo (IT); Marinoni, Roberto, 24020 Peia (Bergamo) (IT)
(74) Representative: Gotra, Stefano

(56) References cited:
- EP-A- 0 353 099
- EP-A- 0 728 696
- EP-A- 0 731 054

## Description

The process and device of the invention for weighing and controlling weights on crane manual and hydraulic jibs is usefully applied in particular in cranes having a tower to which are connected one or more hydraulic jib sections, rotatable in a vertical plane. The sections are actuated by hydraulic cylinders; one or more manual sections are also present which the operator can directly actuate in case of necessity. The rotation on the vertical plane of the hydraulic and manual sections is performed by means of a main operating cylinder.

These cranes are usually provided with weight limiting systems which prevent movement of the hydraulic sections when such a movement would lead to exceeding the crane maximum load rating. Thus, when the crane lifts a weight which creates a moment which is equal to the maximum rated load of the crane, all movements of the hydraulic jib sections tending to increase moment must be prevented. In these cranes an increase in the moment due to the load is translated, according to a more or less linear rule, into an increase in pressure on the base of the main hydraulic cylinder, causing a rotation of the mobile hydraulic jib sections. Control of the moment induced by the load, and limitation thereof, are therefore carried out by controlling and limiting (in relation to a predetermined maximum value) the fluid pressure on the base of the main hydraulic cylinder.

The manual sections are basically cantilever beams the section of which is calculated to resist a given load applied on the end of the beam. Therefore it is possible, and indeed happens, given that the use of the manual sections is at the discretion of the operator and can be performed whatever the position of the mobile hydraulic jib sections, that a load applied on a manual section is not sufficient to exceed the maximum predetermined limit value of the fluid in the base of the main cylinder (and is therefore not sufficient to activate the load limitation system which intervenes when the maximum permitted load for the crane has been exceeded), but is sufficient to cause deformation and even breakage of the manual jib section.

To prevent this drawback, at present loads are applied to the manual sections with an interpositioning of a dynamometer which measures the entity of the load and compares it with the permitted limit load for the section; in general the dynamometer is provided with a radio transmitter which sends a signal to the operator enabling the latter to run a remote check on the load entity and, in some cases, to set off an alarm signal.

The dynamometers, however, exhibit, various drawbacks: firstly, they are quite expensive, so it is quite usual for a crane to be equipped with one only, which has to be moved from one section to another; secondly, batteries are needed, which can run down without warning, putting the dynamometers temporarily out of service. Also, it is possible that the operator might hurriedly hook up the load to a section without using the dynamometer, which leads to a "blind" loading-up, relying only on the subjective assessment of the operator.

Document EP 0 353 099 discloses a monitoring system for load carriers which comprises a number of transducers which are connected to a central unit in order to measure variables which affect the carrying ability of the load carrier. Memory means is also provided and stores data which defines the inter-relationships between the variables. The data defines the inter-relationships in terms of multidimensional surfaces or manifolds with a boundary corresponding to the operational limits of the system.

Computing means connected to the transducers and the memory means performs real time calculation of the status of the system by substitution of variable values received from the transducers.

Document EP 0 731 054 discloses a mobile reach tower crane capable of improving general versatility by using in a normal crane operation and a tower crane operation, and of ensuring safety during work by defining various limitations in response to each operation mode. A main hook is provided to a base boom of a second boom, and an auxiliary hook is provided to a upper end boom of the second boom. An operation mode B with use of the main hook or an operation mode A with use of auxiliary hook can be chosen, in which limitations of the derrick angle, length of the boom, rated load, and boom revolving speed may be defined in each operation mode.

Document EP 0 728 696 discloses a suspension load and tipping moment defecting apparatus for a mobile crane which can detect a suspension load and a tipping moment with high accuracy and use an excessive load prevention load while ensuring safety. For this reason, the apparatus is provided with sensors for detecting a boom length, a boom angle and an axle weight of a boom derricking cylinder on a second boom side, and is equipped with a controller for operating a suspension load suspended from the second boom based on signals from these sensors. In addition, for operating a tipping moment, a boom length sensor and a boom angle sensor on a first boom side are provided.

The main aim of the present invention is to offer a remedy to the above drawbacks, by providing a process and a device for actuating the process which provide in all cases and immediately an evaluation of the entity of the load applied on a manual or hydraulic jib section of a crane.

An advantage of the present invention is that it provides a process and a device for carrying out the process, which are economical and applicable to existing cranes.

These aims and advantages and others besides are all attained by the present invention, as it is characterised in the claims that follow.

Further characteristics and advantages of the present invention will better emerge from the detailed description that follows of the various stages of the process of the invention, as well as a possible but non-exclusive embodiment of a device for actuating the process, illustrated purely by way of a nonlimiting example in the accompanying figures of the drawings, in which:

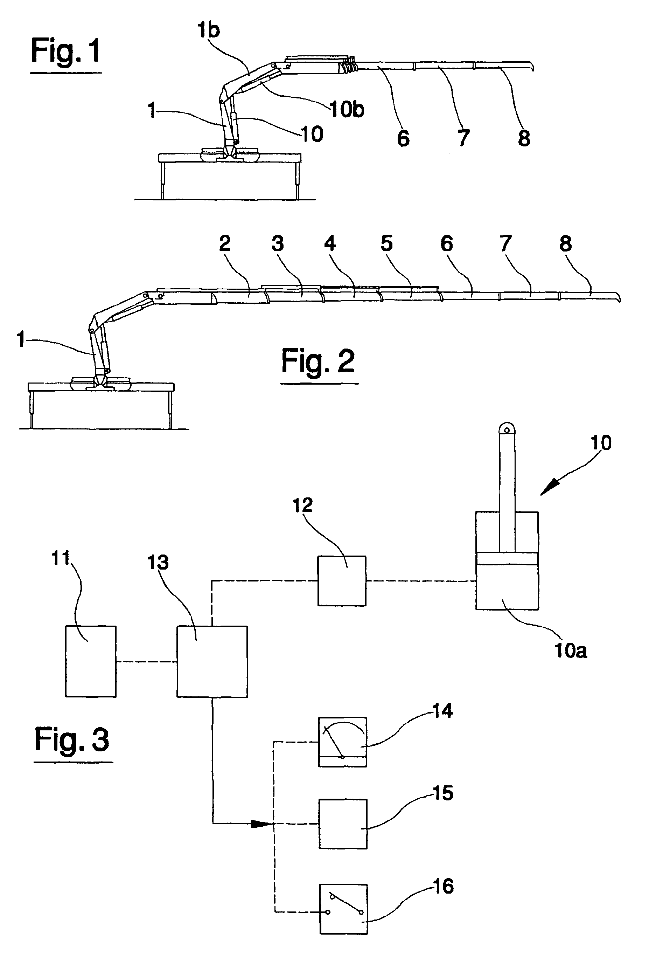

figure 1 is a schematic view in vertical elevation of a crane to which the process and device of the invention can be applied, with the hydraulic jib sections retracted and the manual jib sections extracted;
figure 2 is a schematic view in vertical elevation of a crane to which the process and device of the invention can be applied, with the hydraulic and manual jibs extracted;
figure 3 is a possible block diagram of the device of the object.

The process of the invention is in particular applied to cranes comprising a tower 1 to which one or more hydraulic jib sections are connected rotatably in a vertical plane. In the figures, four hydraulic sections, respectively 2,3, 4 and 5 are denoted. The crane also includes a main jib 1 b, connected to the tower 1, to which main jib 1 b are connected the hydraulic sections supported by a second main cylinder 10b.

The above can be applied to cranes with or without the main jib 1b, as well as with a different number of hydraulic jib sections. Further, what was mentioned in the introduction with regard to reading the pressure on the base of the main cylinder 10 can also be applied to the second main cylinder 10b or another main cylinder governing vertical movement. The extension of the hydraulic sections is performed, as is know, by means of hydraulic cylinders, which are schematically illustrated in the figures.

The illustrated crane exhibits one or more manual sections which are inserted internally of the last hydraulic section 5. In the figures three manual jib sections are included 6, 7 and 8; obviously, however, the following description can be applied to cranes equipped with a different number of manual sections. These sections are manually extracted by the operator and are equipped with manual pins which can block each section in a completely retracted or a completely extracted position.

The hydraulic jib section group - manual and mounted projecting from or directly on the tower or, as shown in the figure, on the main jib 1b, is supported either by a main cylinder 10 or, as shown in the figures, by a second main cylinder 10b, which, apart from supporting the jibs, causes them to rotate on the vertical plane of the hydraulic and manual jib section group.

As previously mentioned, these cranes are generally provided with load limitation systems which prevent movements of the hydraulic sections which might lead to exceeding the maximum rated load of the crane. These systems act by limiting (with respect to a predetermined maximum value) the pressure of the fluid in the base of the main cylinder; as for the manual sections, the loads applied must not exceed the loads calculated from their sections.

The foregoing relates to the normal prior art relating to crane construction.

For the control of the load on the manual sections to be performed in safety, normal load limitation systems cannot be used, so the process of the present invention is used, comprising a first stage of sampling which is performed by the crane constructor.

The sampling stage is performed for each manual section by applying to each thereof a predetermined load weight with the element completely extracted. For reasons that will be specified herein below, a zero predetermined load weight is preferably applied (i.e. no weight at all). This "empty" sampling cycle is carried out so that the pressure created on the base of the main cylinder by the weight of the hydraulic and manual jib sections alone can be determined.

The sampling stage is performed with a predetermined arrangement of the crane on a vertical plane; preferably this position corresponds to a position of the sections which would enable a load to be applied.

During this stage of sampling, the pressure on the base 10a of the main cylinder 10 is measured at a plurality of positions of the hydraulic sections comprised between an initial position, with the sections entirely retracted, and a final position with the hydraulic sections completely extended. As it has been observed that the pressures diagram is more or less linear, it is possible, without introducing appreciable errors in the process, to carry out the sampling process by taking the values with the sections completely retracted and completely extended. Once these values have been taken, they are stored to generate, in relation to each manual section, a sampling diagram in which each pressure value corresponds to the load entity that generated it. Given that the sampling stage is performed with no loads applied, that is, with only the weight of the crane structure itself (obviously a known value), the values of the pressure are directly related to the length of extension of the crane, i.e. the distance of the point of extension at which the load is applied from the main tower. Note that the passage from values of one entity (pressures, load, extension) to those of another entity is a purely mathematical operation as the entities are proportional to each other.

In cases, recently frequent, where the design of the cranes is made using electronic processors which calculate and store all the data relating to the crane structure, the first stage of sampling can be done analytically, starting from the data available on the processor, by use of which all the crane operative functions can be simulated. The only difference with direct sampling is that direct sampling easily takes account of any friction between the various crane organs.

In a further embodiment, sampling can be done with the manual sections completely retracted inside the hydraulic sections; this sampling can be useful, as will be described in more detail herein below, for weighing a load applied on the hydraulic sections (as if they were manual sections), and not the manual sections.

With this first stage which, as previously mentioned, is performed by the crane constructor, a sample diagram representing, so to say, a characteristic element of the crane is obtained which is immutable inasmuch as it is obtained through operations performed on structural elements of the crane itself.

This stage of sampling has been described in relation to a crane having one group only of hydraulic jib elements. In cases of cranes with two groups of hydraulic jib elements the above-described operations can obviously be repeated for each group, keeping the other group in a predetermined conformation (for example, completely extended or completely retracted). In this way, for each manual element, a plurality of diagrams is obtained in relation to a group of hydraulic elements with the other group in predetermined positions. The process used for the crane is entirely similar to the process used for cranes having one group alone of hydraulic elements.

When a manual element is to be used for lifting a load of an unknown entity, the process of the invention includes the following stages.

Firstly, the crane hydraulic elements are placed in the suitable position for lifting the load, and the manual element to which the load is to be attached is completely extracted and, using a system of selection, the sample diagram relating to the extracted element is chosen. The pressure on the structure as borne by the base of the cylinder 10 (or another cylinder, for example the second cylinder 10b), compared with the values of the sample diagram, immediately provides the position of the point of attachment of the load (the load arm length) with respect to the tower.

For the known position it will therefore be possible immediately to calculate the pressure the maximum admissible load on the element will induce on the base of the cylinder during lifting of the load.

The load of unknown entity is then attached to the extended elements and a lifting operation is performed, with a contemporaneous reading of the pressure determined by the load on the main cylinder. From the comparison between the pressure values reported in the sample diagram and the pressure value detected in relation to the load during the lifting stage a differential value of pressure on the base of the main cylinder is obtained, which represents the pressure value that the load alone applied in that position induces on the base of the cylinder. With a simple processing of the differential signal the entity of the load being lifted is obtained. Note that reference is made, almost with no distinction being made, to the pressure on the base of the cylinder or to the entity of the load, since once the position of the load with respect to the tower has been established (following the described process), the pressure and the entity assume proportional values.

It is possible and useful to generate a signal, for example an electrical signal, proportional to the entity of the load, and visualise the signal in order to obtain an immediate visualisation of the load entity. Thus the load is weighed at practically the same moment at which the lifting operation is begun.

It may be useful to generate an alarm signal, for example an optical or acoustic signal, which warns the operator should the entity of the load being lifted be greater than the maximum rated load capacity of the manual element used. It may also be advisable to include a shut-down device to stop the load lift operation should the entity of the load being lifted be greater than the maximum rated load capacity of the manual element used.

The following conditions may arise during the load lifting operations.

The pressure on the cylinder base may be lower than the maximum load rating for the manual element. The load is therefore lifted unproblematically; the process includes an immediate carrying-out of the weight reading of the load. The pressure on the cylinder base may be greater than the maximum rated admissible load for the manual element. The load will not be lifted as the process invokes a halt in the lifting manoeuvre.

Where the entity of the load is barely less than or equal to the entity admissible, the load might detach from the ground and the crane immediately halts (the process however provides a reading of the load weight). This is due to the overweight generated by the acceleration impressed on the load by the manoeuvre. In this case the manoeuvre can be repeated, but more slowly and gently.

If a sampling has been made of the manual elements in the completely retracted position, or if there are no manual elements on the crane, a load can be applied to the end of the hydraulic elements and the weighing operation can be carried out all the same.

The described process can be carried out using a device including simple and known means. The device comprises a storage system 11 of known type, for example an electronic card, in which the sampling diagrams for each manual element are stored, and possibly a diagram relating to the manual elements when completely retracted or the hydraulic elements where there are no manual elements present. The diagrams can be singly recalled using a common selector. The device further comprises a pressure transducer 12 which detects the pressure caused by the load during lifting on the base of the main cylinder (or other cylinder governing vertical movement). Also provided is a circuit comparator of known type, which is generally integrated in an electronic processor 13 in which the card 11 can also be inserted, by means of which pressure values defined by the sample diagram are compared with the pressure values detected during load lifting. The comparator provides a differential signal, usually an electric signal, which is proportional to the difference value between the pressure on the base of the main cylinder, obtained from the sample diagram, and the pressure generated by the load being lifted.

Means for processing the differential signal are also provided, also of known type and inserted in the processor 13, which using simple mathematical operations process the differential signal and provide an indication (generally a new electric signal) of the entity of the load being lifted which has generated the differential signal.

Using the signal processed by the processor 13, a known-type display 14, provided for example with a graduated scale in Kilograms, can directly display the entity of the measured load.

The signal can also be used in conjunction with an alarm 15 of known type 15, constituted for example by a light or siren, which provides a visible or audible signal when the load entity is greater than the maximum rated entity the manual element used can bear.

The signal can also be used in conjunction with a switch 16 which halts the load lifting operation when the load entity detected is greater than the maximum rated entity for the manual element. This operation can be carried out also by acting directly on the distributor supplying the fluid to the main cylinder, which interrupts the flow of fluid into the main cylinder.

The various above-described operation can be carried out by processing pressure signals rather than electric signals. Obviously, in this case, pressure signal processing devices will be used, also of known type.

## Claims

1. A process for weighing and controlling weights applied to manual jib elements and hydraulic jib elements of a crane, the process being of a type applied to cranes which comprise: a tower (1) to which are connected, rotatably in a vertical plane, one or more hydraulic jib elements (2, 3, 4, 5); one or more manual jib elements (6, 7, 8) inserted in a last hydraulic jib element (5) of the hydraulic jib elements (2, 3, 4, 5); a cylinder (10, 10b) for causing rotation in a vertical plane of the hydraulic jib elements and the manual jib elements; **characterised in that** it comprises:
a sampling stage, comprising following stages, carried out on each manual jib element in a completely extended state, to which a predetermined weight is applied: a sampling stage of a pressure detected on a base (10a) of the main cylinder (10) for a plurality of positions of the hydraulic jib elements, the plurality of positions being comprised between an initial position with the hydraulic jib elements completely retracted and a final position with the hydraulic jib elements completely extended; memorisation of values detected in order to generate a sample diagram for each jib element;
a stage in which a manual jib element is used for lifting a load of an unknown entity, which comprises following stages: positioning of the crane in a predetermined position suitable for lifting a load; detecting a pressure determined by the load on the base of the main cylinder; a comparison between sample diagram values relating to the predetermined position of the crane and a pressure value detected relating to the weight of unknown entity, in order to obtain a value expressing a difference in pressure on the base of the main cylinder; a processing, with calculations of known type, of the differential signal in order to obtain an entity of the weight of unknown entity; a generation of a signal which is proportional to the entity of the weight.

2. The process of claim 1, **characterised in that** the stage of sampling is carried out using a predetermined weight which weight is zero.

3. The process of claim 1, **characterised in that** the stage of sampling is carried out in a completely retracted position of the hydraulic jib elements and for a completely extended position of the hydraulic jib elements.

4. The process of claim 1, **characterised in that** it comprises a stage of visualization of the signal proportional to the entity of the weight.

5. The process of claim 1, **characterised in that** it comprises a stage of generation of an alarm signal when an entity of the weight is detected to be greater than a maximum rated entity for a used manual jib element.

6. The process of claim 1, **characterised in that** it comprises a stage of halting load lifting operations when a load entity is greater than the maximum rated entity for a used manual jib element.

7. A crane with a device for weighing and controlling weights applied to manual jib elements and hydraulic jib elements of a crane, which crane comprises: a tower (1) to which are connected, rotatably in a vertical plane, one or more hydraulic jib elements (2, 3, 4, 5); one or more manual jib elements (6, 7, 8) inserted in a last hydraulic jib element (5) of the hydraulic jib elements (2, 3, 4, 5); a cylinder (10, 10b) for causing rotation in a vertical plane of the hydraulic jib elements and the manual jib elements;
**characterised in that** it comprises:
a memorization system (11) for storing a sample diagram for each jib element obtained during a sampling stage;
a pressure transducer (12) for detecting a pressure exerted on the base of the main cylinder during the stage of using a manual jib element for lifting a load of unknown entity;
a comparator circuit (13) of known type, for comparing values defined by the sample diagram with a pressure value detected in relation to the weight of unknown entity, and for providing a differential signal which is proportional to a difference in value between the pressure on the base of the main cylinder stored in the sample diagram and the pressure generated by the weight of unknown entity;
means for processing (13) the differential signal, of known type, for processing the differential signal and providing an entity of the weight of unknown entity which generated the differential signal.

8. The device of claim 7, **characterised in that** it comprises a display (14) of known type for visualising the entity of the weight measured on a graduated scale.

9. The device of claim 7, **characterised in that** it comprises an alarm (15) of known type for providing a visible or audible signal when a detected entity of the load is greater than a maximum rated load for a used manual jib element.

10. The device of claim 7, **characterised in that** it comprises a switch (16) of known type, for halting a lifting operation when an entity of the load is greater than a maximum rated entity for a used manual jib element.

## Patentansprüche

1. Verfahren zum Wiegen und zum Kontrollieren von Gewichten, angebracht an handbetätigten Auslegerelementen oder hydraulischen Auslegerelementen eines Krans, wobei das Verfahren von einem an Kränen anzuwendenden Typ ist, welche wie folgt enthalten: einen Turm (1), an welchen in einer vertikalen Ebene drehbar ein oder mehrere hydraulische Auslegerelemente (2, 3, 4, 5) angeschlossen sind; ein oder mehrere handbetätigte Auslegerelemente (6, 7, 8), eingesetzt in das letzte hydraulische Auslegerelement (5) der hydraulischen Auslegerelemente (2, 3, 4, 5); einen Zylinder (10, 10b) zum Auslösen der Umdrehung in einer vertikalen Ebene der hydraulischen Auslegerelemente und der handbetätigten Auslegerelemente; **dadurch gekennzeichnet, dass** es wie folgt enthält:
- eine Bemusterungsphase, enthaltend die folgenden Phasen, ausgeführt an jedem handbetätigten Auslegerelement in vollkommen ausgefahrenem Zustand, und an welchem ein vorgegebenes Gewicht angebracht ist: eine Bemusterungsphase eines Druckes, erfasst an einer Basis (10a) des Hauptzylinders (10) für eine Anzahl von Positionen der hydraulischen Auslegerelemente, wobei die Anzahl von Positionen zwischen einer Ausgangsposition mit vollkommen zurückgezogenen hydraulischen Auslegerelementen und einer Endposition mit vollkommen ausgefahrenen hydraulischen Auslegerelementen enthalten ist; Speicherung der erfassten Werte, um ein Musterdiagramm für jedes Auslegerelement zu erstellen;
- eine Phase, in welcher ein handbetätigtes Auslegerelement benutzt wird zum Heben einer Last von einem unbekannten Gewicht, welche die folgenden Phasen enthält: Positionierung des Krans in einer vorgegebenen Position, geeignet zum Anheben einer Last; Erfassen eines durch die Ladung an der Basis des Hauptzylinders hervorgerufenen Druckes; Vergleich zwischen den Werten des Musterdiagramms betreffend die vorgegebene Position des Krans und einem erfassten Druckwert, der sich auf das Gewicht unbekannten Umfangs bezieht, um einen Wert zu erhalten, der eine Druckdifferenz an der Basis des Hauptzylinders ausdrückt; Verarbeitung durch Kalkulationen bekannter Art des Differenzsignals, um eine Menge des Gewichtes von unbekanntem Umfang zu erhalten; Erzeugen eines Signals, welches proportional zu der Gewichtsmenge ist.

2. Verfahren nach Patentanspruch 1, **dadurch gekennzeichnet, dass** die Phase der Bemusterung durchgeführt wird unter Verwendung eine vorgegebenen Gewichtes, welches Null ist.

3. Verfahren nach Patentanspruch 1, **dadurch gekennzeichnet, dass** die Phase der Bemusterung durchgeführt wird bei einer vollkommen zurückgezogenen Position der hydraulischen Auslegerelemente und bei einer vollkommen ausgefahrenen Position der hydraulischen Auslegerelemente.

4. Verfahren nach Patentanspruch 1, **dadurch gekennzeichnet, dass** es eine Phase der Sichtbarmachung des Signals proportional zu der Gewichtsmenge enthält.

5. Verfahren nach Patentanspruch 1, **dadurch gekennzeichnet, dass** es eine Phase des Erzeugens eines Alarmsignals enthält, wenn die erfasste Gewichtsmenge grösser ist als eine berechnete maximale Menge für ein verwendetes handbetätigtes Auslegerelement.

6. Verfahren nach Patentanspruch 1, **dadurch gekennzeichnet, dass** es eine Phase des Anhaltens des Lastenhebevorgangs enthält, wenn ein Lastengewicht grösser ist als eine berechnete maximale Menge für ein verwendetes handbetätigtes Auslegerelement.

7. Kran mit einer Vorrichtung zum Wiegen und zum Kontrollieren von Gewichten, angebracht an handbetätigten Auslegerelementen und an hydraulischen Auslegerelementen eines Krans, welcher Kran wie folgt enthält: einen Turm (1), an welchen in einer vertikalen Ebene drehbar ein oder mehrere hydraulische Auslegerelemente (2, 3, 4, 5) angeschlossen sind; ein oder mehrere handbetätigte Auslegerelemente (6, 7, 8), eingesetzt in das letzte hydraulische Auslegerelement (5) der hydraulischen Auslegerelemente (2, 3, 4, 5); einen Zylinder (10, 10b) zum Auslösen der Umdrehung in einer vertikalen Ebene der hydraulischen Auslegerelemente und der handbetätigten Auslegerelemente; **dadurch gekennzeichnet, dass** es wie folgt enthält:
- ein Speichersystem (11) zum Speichern eines Musterdiagramms für jedes Auslegerelement, erhalten während einer Bemusterungsphase;
- einen Drucksensor (12) zum Erfassen eines Druckes, ausgeübt an der Basis des Hauptzylinders während der Phase der Benutzung eines handbetätigten Auslegerelementes zum Anheben einer Last von unbekanntem Umfang;
- einen Vergleichskreis (13) von bekanntem Typ zum Vergleichen von Werten, die durch das Musterdiagramm festgelegt sind, mit einem Druckwert, erfasst im Verhältnis zu dem Gewicht unbekannten Umfangs, sowie zum Erzeugen eines Differenzsignals, welches proportional ist zu dem Differenzwert zwischen dem in dem Musterdiagramm gespeicherten Druck an der Basis des Hauptzylinders und dem durch das Gewicht von unbekanntem Umfang erzeugten Druck;
- Verarbeitungsmittel (13) des Differenzsignals von bekanntem Typ zum Verarbeiten des Differenzsignals und zum Erstellen einer Menge des Gewichtes von unbekanntem Umfang, welches das Differenzsignal erzeugt hat.

8. Vorrichtung nach Patentanspruch 7, **dadurch gekennzeichnet, dass** sie ein Display (14) bekannter Art zur Sichtbarmachung an einer Messleiste der erfassten Gewichtsmenge enthält.

9. Vorrichtung nach Patentanspruch 7, **dadurch gekennzeichnet, dass** sie einen Alarm (15) bekannter Art enthält, um ein sichtbares oder hörbares Signal auszusenden, wenn eine erfasste Menge der Last grösser ist als die berechnete maximale Last für ein verwendetes handbetätigtes Auslegerelement.

10. Vorrichtung nach Patentanspruch 7, **dadurch gekennzeichnet, dass** es einen Schalter (16) bekannter Art enthält, um den Lastenhebevorgang anzuhalten, wenn ein Lastenumfang grösser ist als eine berechnete maximale Menge für ein verwendetes handbetätigtes Auslegerelement.

## Revendications

1. Procédé pour peser et contrôler des poids appliqués à des flèches manuelles ou hydrauliques d'une grue, le procédé étant du type appliqué à des grues comprenant: une colonne (1) à laquelle sont connectés, pivotants dans un plan vertical, un ou plusieurs éléments de flèche hydrauliques (2, 3, 4, 5); un ou plusieurs éléments de flèche manuels (6, 7, 8) insérés dans un dernier élément de flèche hydraulique (5) des éléments de flèche hydrauliques (2, 3, 4, 5); un vérin (10, 10b) causant une rotation dans un plan vertical des éléments de flèche hydraulique et des éléments de flèche manuels; **caractérisé en ce qu'**il comprend:
- une phase d'échantillonnage, comprenant à son tour les phases suivantes, effectuées sur chaque élément de flèche manuel dans un état complètement étendu, auquel un poids prédéterminé est appliqué: une phase d'échantillonnage d'une pression détectée sur une base (10a) du vérin principal (10) pour une pluralité de positions des éléments de flèche hydrauliques, la pluralité de positions étant comprise entre une position initiale, dans laquelle les éléments de flèche hydrauliques sont complètement rétractés, et une position finale dans laquelle les éléments de flèche hydrauliques sont complètement étendus; mémorisation des valeurs détectées de manière à générer un diagramme d'échantillonnage pour chaque élément de flèche;
- une phase dans laquelle un élément de flèche manuel est utilisé pour soulever une charge d'entité inconnue, comprenant à son tour les phases suivantes: positionnement de la grue dans une position prédéterminée adaptée au soulèvement d'une charge; détection d'une pression déterminée par la charge sur la base du vérin principal; comparaison entre des valeurs d'un diagramme d'échantillonnage relatives à la position prédéterminée de la grue et une valeur de pression détectée relative au poids d'entité inconnue, de manière à obtenir une valeur indiquant une différence de pression sur la base du vérin principal; une élaboration, avec des calculs de type connu, du signal différentiel de manière à obtenir une entité du poids d'entité inconnue; une génération d'un signal proportionnel à l'entité du poids.

2. Procédé selon la revendication 1, **caractérisé en ce que** la phase d'échantillonnage est effectuée avec une charge prédéterminée d'entité égale à zéro.

3. Procédé selon la revendication 1, **caractérisé en ce que** la phase d'échantillonnage est effectuée dans une position complètement rétractée des éléments de flèche hydrauliques et pour une position complètement étendue des éléments de flèche hydrauliques.

4. Procédé selon la revendication 1, **caractérisé en ce qu'**il comprend une phase de visualisation du signal proportionnel à l'entité du poids.

5. Procédé selon la revendication 1, **caractérisé en ce qu'**il comprend une phase de génération d'un signal d'alarme lorsqu'une entité du poids est détectée comme étant supérieure à une entité maximum supportée par l'élément de flèche manuel utilisé.

6. Procédé selon la revendication 1, **caractérisé en ce qu'**il comprend une phase d'arrêt des opérations de soulèvement de la charge lorsqu'une entité de la charge est supérieure à l'entité maximum supportée par un élément de flèche manuel utilisé.

7. Grue comprenant un dispositif pour peser et contrôler des poids appliqués à des flèches manuelles ou hydrauliques d'une grue, laquelle grue comprend: une colonne (1) à laquelle sont connectés, pivotants dans un plan vertical, un ou plusieurs éléments de flèche hydrauliques (2, 3, 4, 5); un ou plusieurs éléments de flèche manuels (6, 7, 8) insérés dans un dernier élément de flèche hydraulique (5) des éléments de flèche hydrauliques (2, 3, 4, 5); un vérin (10, 10b) causant une rotation dans un plan vertical des éléments de flèche hydraulique et des éléments de flèche manuels;
**caractérisée en ce qu'**elle comprend:
- un système de mémorisation (11) pour stocker un diagramme d'échantillonnage pour chaque élément de flèche obtenu pendant la phase d'échantillonnage;
- un transducteur de pression (12) pour détecter une pression exercée sur la base du vérin principal pendant la phase d'utilisation d'un élément de flèche manuel pour soulever une charge d'entité inconnue;
- un circuit comparateur (13) de type connu, pour comparer les valeurs définies par le diagramme d'échantillonnage avec une valeur de pression détectée en relation au poids d'entité inconnue, et pour fournir un signal différentiel proportionnel à une différence de valeur entre la pression sur la base du vérin principal stockée dans le diagramme d'échantillonnage et la pression générée par le poids d'entité inconnue;
- des moyens d'élaboration (13) du signal différentiel, de type connu, pour élaborer le signal différentiel et fournir une entité du poids d'entité inconnue qui a généré le signal différentiel.

8. Dispositif selon la revendication 7, **caractérisé en ce qu'**il comprend un écran (14) de type connu pour visualiser l'entité du poids mesuré sur une échelle graduée.

9. Dispositif selon la revendication 7, **caractérisé en ce qu'**il comprend une alarme (15) de type connu pour fournir un signal visuel ou sonore lorsqu'une entité détectée de la charge est supérieure à une charge maximum supportée par un élément de flèche manuel utilisé.

10. Dispositif selon la revendication 7, **caractérisé en ce qu'**il comprend un interrupteur (16) de type connu, pour arrêter une opération de soulèvement lorsqu'une entité de la charge est supérieure à une entité maximum supportée par un élément de flèche manuel.
